# EUROPÄISCHE PATENTANMELDUNG

(11) **EP 3 974 159 A1**
(43) Veröffentlichungstag der Anmeldung: **30.03.2022**
(21) Anmeldenummer: 20199010.8
(22) Anmeldetag: 29.09.2020
(51) Int. Cl.: B29C 64/118, B29C 64/141, B29C 64/194, B29C 64/209, B29C 64/232, B29C 64/236, B29C 64/241, B29C 64/295, B22F 10/368, B22F 12/13, B22F 12/00, B22F 12/47, B22F 12/48, B22F 12/53, B22F 12/90, B23K 26/342, B33Y 10/00, B33Y 30/00, B33Y 40/10, B33Y 50/02, B22F 10/25

(54) **VERFAHREN ZUR ADDITIVEN FERTIGUNG EINES DREIDIMENSIONALEN DRUCKOBJEKTS**

(71) Anmelder: Siemens Aktiengesellschaft, 80333 München (DE)
(72) Erfinder: Jähnicke, Jens, 09112 Chemnitz (DE); Kinzler, Edwin-Carl, 73262 Reichenbach (DE)

(57) **Zusammenfassung**

Die Anmeldung betrifft ein Verfahren zur additiven Fertigung eines dreidimensionalen Druckobjekts (18) mittels einer translatorisch in drei Achsen (X, Y, Z) verfahrbaren und rotatorisch starr ausgeführten Druckanordnung (4) auf einem Untergrund (16). Um ein Verfahren anzugeben, wird vorgeschlagen, dass dem Untergrund (16) ein erstes Feld (24) und ein dem ersten Feld (24) in einer Druckrichtung (r) vorgelagertes zweites Feld (28) zugewiesen wird, wobei im ersten Feld (24) ein Druckmaterial (26) aufgetragen wird und wobei das zweite Feld (28), insbesondere kontaktlos, vorgewärmt wird, wobei eine Position des zweiten Feldes (28) während des Druckvorgangs, insbesondere elliptisch, um das erste Feld (24) rotiert wird.

## Beschreibung

Die Erfindung betrifft ein Verfahren zur additiven Fertigung eines dreidimensionalen Druckobjekts.

Ferner betrifft die Erfindung eine Steuereinheit mit Mitteln zur Durchführung eines derartigen Verfahrens.

Darüber hinaus betrifft die Erfindung ein Verfahren zur additiven Fertigung eines dreidimensionalen Druckobjekts.

Insbesondere bei multiaxialen additiven Fertigungsverfahren werden Prozessköpfe auf definierten Werkzeugbahnen bewegt, um Metall oder Kunststoffteile generativ, insbesondere schichtweise, aufzubauen. Ein derartiges additives Fertigungsverfahren wird auch 3D-Druck genannt. Bei der additiven Fertigung mit metallischen Werkstoffen kommt beispielsweise ein "Directed Energy Deposition" (DED) Verfahren, insbesondere "Laser-Pulver Auftragsschweißen" (LPA, auf Englisch "Laser Metal Deposition" (LMD)), Laser-Draht-Auftragsschweißen, "Wire Arc Additive Manufacturing" (WAAM) oder Auftragsschweißen mittels Elektronenstrahl, zum Einsatz. Bei der additiven Fertigung mit Kunststoffen, insbesondere Polymeren, kommt beispielsweise ein Extrusionsverfahren (auf Englisch "Material Extrusion" (ME)) zu Einsatz, das auch "Fused Deposition Modeling" (FDM) genannt wird. Ein Druckmaterial wird beispielsweise als Pulver, als Draht oder als Filament zugeführt. Die Qualität des mittels des additiven Fertigungsverfahrens hergestellten Bauteils hängt maßgeblich davon ab, ob Prozessparameter während des gesamten Druckprozesses in einem zulässigen, insbesondere optimalen, gehalten wurden. Einer dieser Prozessparameter ist insbesondere eine Temperatur des Druckmaterials, da es beispielsweise bei einer zu niedrigen Temperatur zu Fehlern in der Bindung zwischen den Schichten kommt.

Die Veröffentlichung "Verbesserung der mechanischen Eigenschaften im FLM-Verfahren durch lokale Laservorerwärmung und Endlosfaserverstärkung", Kühn, Cornelius & Nieseb, Bernd & Witt, Gerd., 2019 beschreibt ein Fused-Layer-Modelling/ Manufacturing" (FLM) Verfahren, welches auf einem additiven, thermoplastischen Extrusionsprozess basiert, in dem eine finale dreidimensionale Bauteilgeometrie durch zweidimensionale Einzelschichten hergestellt wird. Um einen zeit- und pfadabhängigen Temperaturgradienten zwischen den unterschiedlichen Schichten in Z-Richtung zu minimieren, wird ein auf einer FLM-CNC-Prototypenmaschine integrierter Laser zur lokalen Substratvorerwärmung eingesetzt.

Vor diesem Hintergrund ist es Aufgabe der Erfindung, ein Verfahren zur additiven Fertigung eines dreidimensionalen Druckobjekts anzugeben, welches, im Vergleich zum Stand der Technik, einfacher und zuverlässiger ist.

Diese Aufgabe wird erfindungsgemäß gelöst durch ein Verfahren zur additiven Fertigung eines dreidimensionalen Druckobjekts mittels einer translatorisch in drei Achsen verfahrbaren und rotatorisch starr ausgeführten Druckanordnung auf einem Untergrund, wobei dem Untergrund ein erstes Feld und ein dem ersten Feld in einer Druckrichtung vorgelagertes zweites Feld zugewiesen wird, wobei im ersten Feld ein Druckmaterial aufgetragen wird und wobei das zweite Feld, insbesondere kontaktlos, vorgewärmt wird, wobei eine Position des zweiten Feldes während des Druckvorgangs, insbesondere elliptisch, um das erste Feld rotiert wird.

Ferner wird die Aufgabe erfindungsgemäß durch eine Steuereinheit mit Mitteln zur Durchführung eines derartigen Verfahrens gelöst.

Darüber hinaus wird die Aufgabe erfindungsgemäß gelöst durch eine Anordnung zur additiven Fertigung eines dreidimensionalen Druckobjekts mittels einer translatorisch in drei Achsen verfahrbaren und rotatorisch starr ausgeführten Druckanordnung auf einem Untergrund, wobei die Anordnung konfiguriert ist, dem Untergrund ein erstes Feld und ein dem ersten Feld in einer Druckrichtung vorgelagertes zweites Feld zuzuweisen, wobei die Druckanordnung zumindest eine Druckvorrichtung, welche konfiguriert ist im ersten Feld ein Druckmaterial aufzutragen, und eine Heizvorrichtung, welche konfiguriert ist, das zweite Feld, insbesondere kontaktlos, vorzuwärmen, umfasst, wobei die Heizvorrichtung konfiguriert ist, eine Position des zweiten Feldes während des Druckvorgangs, insbesondere elliptisch, um das erste Feld zu rotieren.

Die in Bezug auf das Verfahren nachstehend angeführten Vorteile und bevorzugten Ausgestaltungen lassen sich sinngemäß auf die Steuereinheit und die Anordnung übertragen.

Der Erfindung liegt die Überlegung zugrunde, den Verschleiß einer Druckanordnung zu reduzieren, indem diese translatorisch in drei Achsen verfahrbar, jedoch rotatorisch starr ausgeführt ist. Durch die rotatorisch starre Ausführung entfällt darüber hinaus eine aufwändige Rotationsachse, was zu einer Vereinfachung des Druckverfahrens führt. Die Druckanordnung umfasst eine Druckvorrichtung, welche konfiguriert ist in einem ersten Feld ein Druckmaterial aufzutragen, wobei das Druckmaterial beispielsweise einen metallischen Werkstoff oder einen Kunststoff, insbesondere ein Polymer, umfasst und insbesondere als Pulver, als Draht oder als Filament zugeführt wird. Das Druckmaterial wird beispielsweise mittels Directed Energy Deposition (DED) oder Material Extrusion (ME) auf einen Untergrund aufgetragen, wobei der Untergrund ein teilweise fertig gedrucktes dreidimensionale Druckobjekt oder eine Oberfläche, auf dem das dreidimensionale Druckobjekt gedruckt werden kann, ist. Der Untergrund wir in einem dem ersten Feld in Druckrichtung vorgelagerten zweiten Feld durch eine Heizvorrichtung, insbesondere kontaktlos, vorgewärmt. Der Untergrund wird beispielsweise mittels Laser oder Plasma vorgewärmt.

Um beispielsweise eine gekrümmte Bahn zu drucken, wird, während die Druckanordnung translatorisch bewegt wird, eine Position des zweiten Feldes während des Druckvorgangs, insbesondere elliptisch, um das erste Feld rotiert. Die Rotation findet bei einem Laser beispielsweise über Spiegel oder bei einem Plasma mittels Plasma-Rotationsdüsen statt. Eine mechanische Rotation der Druckanordnung entfällt. Die Mittel zu Durchführung des Verfahrens der Steuereinheit umfassen beispielswiese einen digitalen Logikbaustein, insbesondere einen Mikroprozessor, einen Mikrocontroller, einen FPGA (field programmable gate array), einen ASIC (application-specific integrated circuit), der für den Betrieb der Anordnung konfiguriert ist.

Eine weitere Ausführungsform sieht vor, dass die Position des zweiten Feldes diskret um das erste Feld rotiert wird. Eine diskrete Positionierung des zweiten Feldes findet, im Gegensatz zu einer kontinuierlichen Positionierung, unstetig beispielsweise bestimmte Winkel oder Abstände statt. Mittel zur diskreten Rotation der Position des zweiten Feldes um das erste Feld sind beispielsweise Leiter, insbesondere Lichtleiter, elektrische, Leiter oder andere Leiter, zur Übertragung der von der Heizvorrichtung bereitgestellten Energie, welche in Umfangsrichtung um die Druckvorrichtung angeordnet und über eine Schaltvorrichtung im Wechsel ansteuerbar sind. Eine derartige diskrete Rotation der Position des zweiten Feldes findet beispielsweise zumindest in 5°-Schritten, insbesondere zumindest in 10°-Schritten, statt, sodass ein Wärmeeintrag beim Drucken einer gekrümmten Bahn ohne eine mechanische Rotation der Druckanordnung erfolgen kann, was einen Verschleiß einer Druckanordnung reduziert.

Eine weitere Ausführungsform sieht vor, dass eine Position des zweiten Feldes im Verhältnis zum ersten Feld während des Druckvorgangs dynamisch so angepasst wird, dass die Felder auf einer zu druckenden gekrümmten Bahn, insbesondere jeweils zentriert, angeordnet sind. Eine derartige dynamische Anpassung erfolgt beispielsweise über die Ansteuerung der Druckanordnung mittels der Steuereinheit und führt zu einem präzisen und qualitativ hochwertigen Druckergebnis.

Eine weitere Ausführungsform sieht vor, dass das zweite Feld mittels eines Lasers auf eine definierte Soll-Temperatur vorgewärmt wird. Der Wärmeeintrag eines Lasers ist, insbesondere hinsichtlich seiner Intensität und Position, einfach und präzise einstellbar.

Eine weitere Ausführungsform sieht vor, dass ein Wärmeeintrag über die Taktung des Lasers gesteuert wird. Eine derartige Steuerung der mittleren Leistung des Lasers bei gleichbleibender Spitzenleistung ist einfach und kostengünstig zu realisieren.

Eine weitere Ausführungsform sieht vor, dass mit zumindest einer Sensoranordnung eine Ist-Temperatur ermittelt wird, wobei anhand der ermittelten Ist-Temperatur eine Soll-Temperatur im zweiten Feld geregelt wird. Eine derartige Sensoranordnung weist beispielsweise einen Infrarot-Temperatursensor oder ein Pyrometer auf, welche eine kontaktlose Ermittlung der Ist-Temperatur des Untergrunds ermöglichen. Durch eine Regelung der Soll-Temperatur anhand der Ist-Temperatur wird eine präzise Vorwärmung erreicht.

Eine weitere Ausführungsform sieht vor, dass die Ist-Temperatur in einem dem zweiten Feld in Druckrichtung vorgelagerten dritten Feld mittels der Sensoranordnung, insbesondere kontaktlos, ermittelt wird. Durch einen derartigen Abstand zur Druckvorrichtung wird die Sensoranordnung signifikant geringer durch den Druckprozess, beispielweise durch umherfliegende Partikel, gestört, sodass kostengünstige Sensoren verwendbar sind.

Eine weitere Ausführungsform sieht vor, dass die Positionierung der Felder anhand der Druckrichtung in einem CAD/CAM System erfolgt, was zu einer Vereinfachung des Druckverfahrens und der Ansteuerung der Druckanordnung führt.

Im Folgenden wird die Erfindung anhand der in den Figuren dargestellten Ausführungsbeispiele näher beschrieben und erläutert.

Es zeigen:
- FIG 1: eine schematische Darstellung einer ersten Ausgestaltung einer Anordnung zur additiven Fertigung mit einer Druckanordnung,
- FIG 2: eine schematische Darstellung einer zweiten Ausgestaltung einer Anordnung zur additiven Fertigung mit einer Druckanordnung und
- FIG 3: eine schematische Darstellung eines Verfahrens zum Drucken einer gekrümmten Bahn.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

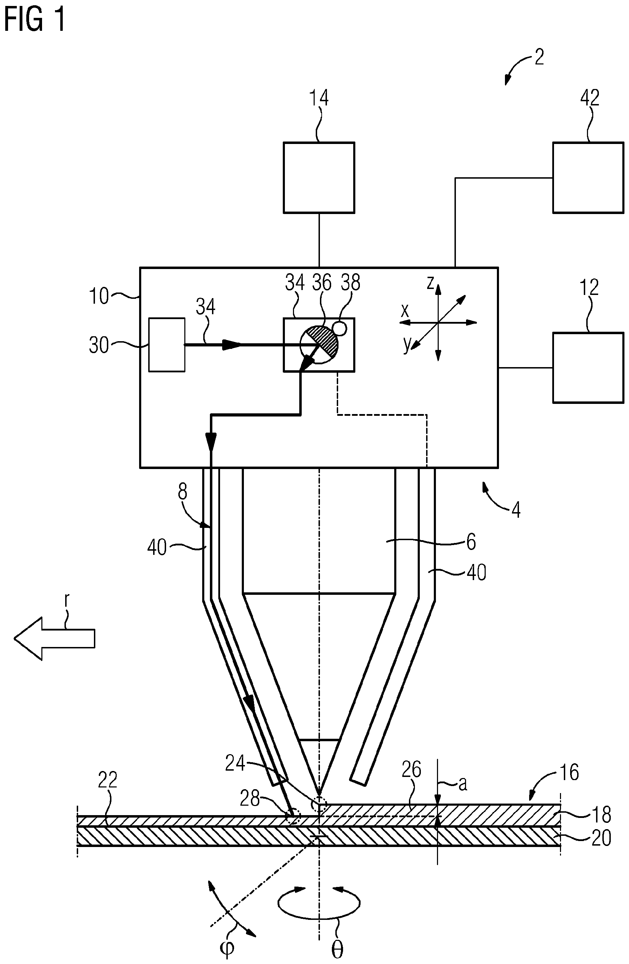

FIG 1 zeigt eine schematische Darstellung einer ersten Ausgestaltung einer Anordnung 2 zur additiven Fertigung mit einer Druckanordnung 4, welche translatorisch in drei Achsen X, Y, Z verfahrbar und rotatorisch starr ausgeführt ist. Die Druckanordnung 4 umfasst eine Druckvorrichtung 6 sowie eine Heizvorrichtung 8, welche in einem gemeinsamen Drucckopf 10 aufgenommen sind. Die Druckanordnung 4, welche den Druckkopf 10, die Druckvorrichtung 6 und die Heizvorrichtung 8 umfasst, ist mit Hilfe von Stellgliedern 12, 14 translatorisch in drei Achsen X, Y, Z verfahrbar. Beispielsweise wird die Druckanordnung 4 mittels eines X/Y-Stellgliedes 12, insbesondere gleichzeitig, entlang der X- und Y-Achse bewegt, während ein Z-Stellglied 14 die Druckanordnung 4 entlang der Z-Achse bewegt, um beispielsweise einen Abstand a der Druckvorrichtung 6 von einem Untergrund 16 zu regulieren. Der Untergrund 16 ist ein teilweise fertig gedrucktes dreidimensionale Druckobjekt 18 und/oder ein Stützelement 20, welches eine Oberfläche 22 umfasst, auf dem das dreidimensionale Druckobjekt 18 druckbar ist. Das Stützelement 20, welches beispielsweise Teil eines Drucktisches ist, ist rotatorisch um einen Azimutwinkel θ und einen Elevationswinkel ϕ beweglich, um beispielsweise das Drucken von Überhängen ohne zusätzliche Stützstrukturen zu ermöglichen.

Die Druckvorrichtung 6 ist konfiguriert, in einem ersten Feld 24 ein Druckmaterial 26 aufzutragen, wobei aus dem Druckmaterial 26 das dreidimensionale Druckobjekt 18 additiv, insbesondere schichtweise, ausgebildet wird. Beispielhaft ist die Druckvorrichtung 6 zum Drucken mittels Auftragsschweißen, insbesondere Laser-Pulver-Auftragsschweißen oder Laser-Draht-Auftragsschweißen, ausgeführt, wobei als Druckmaterial 26 insbesondere ein metallischer Werkstoff zum Einsatz kommt. Alternativ ist die Druckvorrichtung 6 zum Drucken mittels Materialextrusion ausgeführt, wobei als Druckmaterial 26 beispielsweise Kunststoff oder Harz eingesetzt wird. Optional enthält der, insbesondere thermoplastische, Kunststoff eine Füllung aus Metall- oder Keramikpartikeln, wobei metall- oder keramikgefüllte Filamente nach dem Druckvorgang, beispielsweise durch einen Entbinderungs- und Sinterprozess, weiterverarbeitet werden. Zusätzliche Komponenten, wie beispielsweise ein Reservoir für das Druckmaterial 26 sind aus Gründen der Übersichtlichkeit in FIG 1 nicht dargestellt. Die Druckanordnung 4 kann mehrere, insbesondere in einer Druckrichtung r hintereinander angeordnete, Druckvorrichtungen 6 aufweisen.

Die Heizvorrichtung 8 ist konfiguriert ein zweites Feld 28, insbesondere kontaktlos, vorzuwärmen, wobei das zweite Feld 28 dem ersten Feld 24 in Druckrichtung r vorgelagert ist. Durch das Vorwärmen im Bereich des zweiten Feldes 28 werden Fehler bei der Verbindung der Schichten des dreidimensionalen Druckobjekts 18 vermieden. Eine Position des zweiten Feldes 28 im Verhältnis zum ersten Feld 24 wird während des Druckvorgangs dynamisch so angepasst wird, dass die Felder 24, 28 auf einer zu druckenden gekrümmten Bahn, insbesondere jeweils zentriert, angeordnet sind. Beispielhaft umfasst die Heizvorrichtung 8 einen Laser 30, der einen Strahl 32 erzeugt. Der Laserstrahl 32 wird über eine optische Schaltvorrichtung 34, welche beispielsweise einen Spiegel 36 und ein Stellglied 38, insbesondere einen Motor, zur Steuerung des Spiegels 36 umfasst, an zumindest einen einer Mehrzahl von, beispielsweise elliptisch, insbesondere kreisförmig, in Umfangsrichtung um die Druckvorrichtung 6 angeordneten Lichtleitern 40 geleitet. Der Laserstrahl 32 aus dem zumindest einen Lichtleiter 40 trifft im zweiten Feld 28 auf dem Untergrund 16 auf, wobei der Untergrund 16 im Bereich des zweiten Feldes 28 auf eine definierte Soll-Temperatur vorgewärmt wird. Ein Wärmeeintrag ist beispielsweise über eine Taktung des Lasers 30 steuerbar. Ändert sich eine Druckrichtung r, beispielsweise beim Drucken einer gekrümmten Bahn, so wird der Laserstrahl 32 von der optischen Schaltvorrichtung 34, insbesondere durch Drehen des Spiegels 36, auf einen weiteren Lichtleiter 40 umgeleitet, sodass das zweite Feld 28, ohne eine mechanische Rotation der Druckanordnung 4, insbesondere elliptisch, um das erste Feld 24 rotiert wird. Durch die Mehrzahl von Lichtleiter 40 erfolgt die Rotation des zweiten Feldes 28 diskret. Auf diese Weise wird der Untergrund 16 im dem ersten Feld 24 vorgelagerten zweiten Feld 28 durch den Wärmeeintrag des Lasers 30 vorgewärmt, wobei die Felder 24, 28 stets auf der zu druckenden gekrümmten Bahn liegen.

Eine Steuereinheit 42 ist operativ mit den Stellgliedern 12, 14 und mit dem Druckkopf 10, in welchem die Druckvorrichtung 6 und die Heizvorrichtung 8 aufgenommen sind, verbunden. Insbesondere wird ein Betrieb der Druckvorrichtung 6 und der Heizvorrichtung 8 durch die Steuereinheit 42 gesteuert. Die Steuereinheit 42 umfasst einen digitalen Logikbaustein, beispielswiese einen Mikroprozessor, einen Mikrocontroller, einen FPGA (field programmable gate array) oder einen ASIC (application-specific integrated circuit), der für den Betrieb der Anordnung 2 konfiguriert ist.

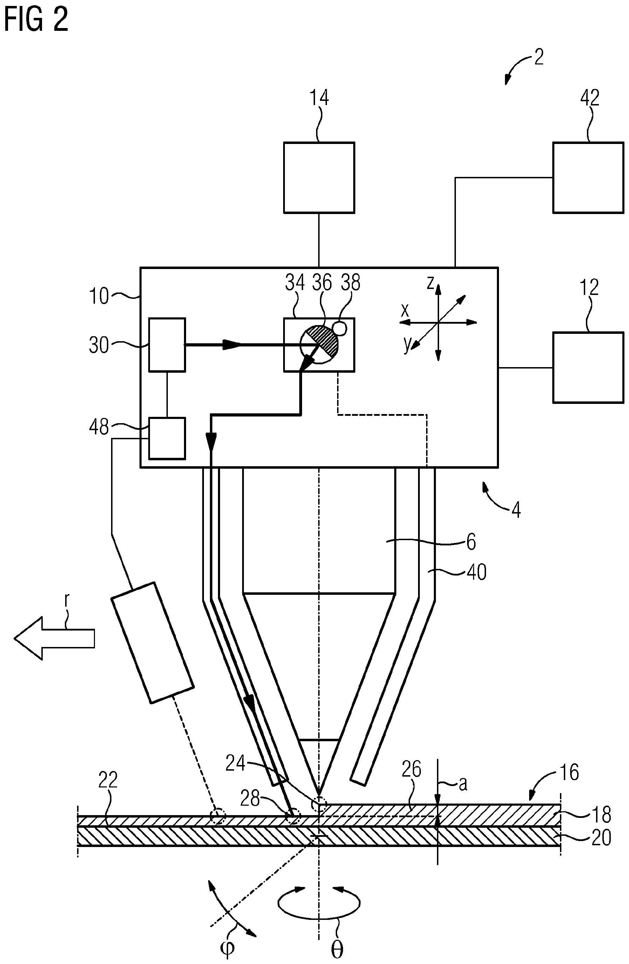

FIG 2 zeigt eine schematische Darstellung einer zweiten Ausgestaltung einer Anordnung 2 zur additiven Fertigung mit einer Druckanordnung 4, welche eine Sensoranordnung 44 zur Ermittlung einer Ist-Temperatur des Untergrunds 16 aufweist, wobei die Ist-Temperatur in einem dem zweiten Feld 28 in Druckrichtung r vorgelagerten dritten Feld 46, insbesondere kontaktlos, ermittelt wird. Ein Infrarot-Temperatursensor oder ein Pyrometer ermöglichen eine derartige kontaktlose Ermittlung der Ist-Temperatur des Untergrunds 16. Ferner ist die Sensoranordnung 44 einer Regelungseinrichtung 48 zur Regelung einer Soll-Temperatur im zweiten Feld 28 anhand der ermittelten Ist-Temperatur im dritten Feld 46 zugeordnet. Insbesondere regelt die Regelungseinrichtung 48 die Taktung des Lasers 30. Die weitere Ausführung der Anordnung 2 in FIG 2 entspricht der Ausführung in FIG 1.

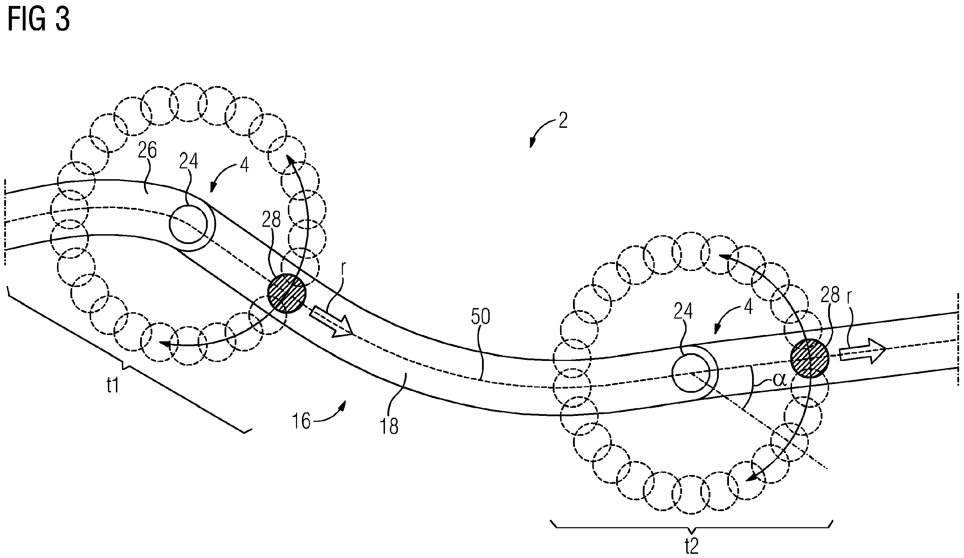

FIG 3 zeigt eine schematische Darstellung eines Verfahrens zum Drucken einer gekrümmten Bahn 50, wobei der Druckvorgang zu verschiedenen Zeitpunkten t1, t2 dargestellt ist. Der Untergrund 16 wird jeweils im Bereich des dem ersten Feld 24 in Druckrichtung r vorgelagerten zweiten Feldes 28 auf eine definierte Soll-Temperatur vorgewärmt. Die Position des zweiten Feldes 28 wird im Verhältnis zum ersten Feld 24 derartig diskret um einen Drehwinkel α rotiert, dass die Felder 24, 28 ohne eine mechanische Rotation der Druckanordnung 4 stets auf der zu druckenden gekrümmten Bahn 50 liegen. Die weitere Ausführung der Anordnung 2 in FIG 3 entspricht der Ausführung in FIG 1.

Zusammenfassend betrifft die Erfindung ein Verfahren zur additiven Fertigung eines dreidimensionalen Druckobjekts 18 mittels einer translatorisch in drei Achsen X, Y, Z verfahrbaren und rotatorisch starr ausgeführten Druckanordnung 4 auf einem Untergrund 16. Um ein Verfahren anzugeben, welches, im Vergleich zum Stand der Technik, einfacher und zuverlässiger ist, wird vorgeschlagen, dass dem Untergrund 16 ein erstes Feld 24 und ein dem ersten Feld 24 in einer Druckrichtung r vorgelagertes zweites Feld 28 zugewiesen wird, wobei im ersten Feld 24 ein Druckmaterial 26 aufgetragen wird und wobei das zweite Feld 28, insbesondere kontaktlos, vorgewärmt wird, wobei eine Position des zweiten Feldes 28 während des Druckvorgangs, insbesondere elliptisch, um das erste Feld 24 rotiert wird.

## Patentansprüche

1. Verfahren zur additiven Fertigung eines dreidimensionalen Druckobjekts (18) mittels einer translatorisch in drei Achsen (X, Y, Z) verfahrbaren und rotatorisch starr ausgeführten Druckanordnung (4) auf einem Untergrund (16),
wobei dem Untergrund (16) ein erstes Feld (24) und ein dem ersten Feld (24) in einer Druckrichtung (r) vorgelagertes zweites Feld (28) zugewiesen wird,
wobei im ersten Feld (24) ein Druckmaterial (26) aufgetragen wird und
wobei das zweite Feld (28), insbesondere kontaktlos, vorgewärmt wird,
wobei eine Position des zweiten Feldes (28) während des Druckvorgangs, insbesondere elliptisch, um das erste Feld (24) rotiert wird.

2. Verfahren nach Anspruch 1,
wobei die Position des zweiten Feldes (28) diskret um das erste Feld (24) rotiert wird.

3. Verfahren nach einem der Ansprüche 1 oder 2,
wobei eine Position des zweiten Feldes (28) im Verhältnis zum ersten Feld (24) während des Druckvorgangs dynamisch so angepasst wird, dass die Felder (24, 28) auf einer zu druckenden gekrümmten Bahn (50), insbesondere jeweils zentriert, angeordnet sind.

4. Verfahren nach einem der vorherigen Ansprüche,
wobei das zweite Feld (28) mittels eines Lasers (30) auf eine definierte Soll-Temperatur vorgewärmt wird.

5. Verfahren nach Anspruch 4,
wobei ein Wärmeeintrag über die Taktung des Lasers (30) gesteuert wird.

6. Verfahren nach einem der vorherigen Ansprüche,
wobei mit zumindest einer Sensoranordnung (44) eine Ist-Temperatur ermittelt wird,
wobei anhand der ermittelten Ist-Temperatur eine Soll-Temperatur im zweiten Feld (28) geregelt wird.

7. Verfahren nach Anspruch 6,
wobei die Ist-Temperatur in einem dem zweiten Feld (28) in Druckrichtung (r) vorgelagerten dritten Feld (46) mittels der Sensoranordnung (44), insbesondere kontaktlos, ermittelt wird.

8. Verfahren nach einem der vorherigen Ansprüche,
wobei die Positionierung der Felder (24, 28) anhand der Druckrichtung (r) in einem CAD/CAM System erfolgt.

9. Steuereinheit (42) mit Mitteln zur Durchführung eines Verfahrens nach einem der Ansprüche 1 bis 8.

10. Anordnung (2) zur additiven Fertigung eines dreidimensionalen Druckobjekts (18) mittels einer translatorisch in drei Achsen (X, Y, Z) verfahrbaren und rotatorisch starr ausgeführten Druckanordnung (4) auf einem Untergrund (16),
wobei die Anordnung (2) konfiguriert ist, dem Untergrund (16) ein erstes Feld (24) und ein dem ersten Feld (24) in einer Druckrichtung (r) vorgelagertes zweites Feld (28) zuzuweisen,
wobei die Druckanordnung (4) zumindest eine Druckvorrichtung (6), welche konfiguriert ist im ersten Feld (24) ein Druckmaterial (26) aufzutragen,
und eine Heizvorrichtung (8), welche konfiguriert ist, das zweite Feld (28), insbesondere kontaktlos, vorzuwärmen, umfasst,
wobei die Heizvorrichtung (8) konfiguriert ist, eine Position des zweiten Feldes (28) während des Druckvorgangs, insbesondere elliptisch, um das erste Feld (24) zu rotieren.

11. Anordnung (2) nach Anspruch 10,
wobei die Heizvorrichtung (8) Mittel zur diskreten Rotation der Position des zweiten Feldes (28) um das erste Feld (24) aufweist.

12. Anordnung (2) nach einem der Ansprüche 10 oder 11,
wobei die Heizvorrichtung (8) einen Laser umfasst, der konfiguriert ist, das zweite Feld (28) auf eine definierte Soll-Temperatur vorzuwärmen.

13. Anordnung (2) nach einem der Ansprüche 10 bis 12, aufweisend eine Sensoranordnung (44) zur Ermittlung einer Ist-Temperatur.

14. Anordnung (2) nach Anspruch 13
wobei die Sensoranordnung (44) einer Regelungseinrichtung (48) zur Regelung einer Soll-Temperatur im zweiten Feld (28) anhand der ermittelten Ist-Temperatur zugeordnet ist
